Europäisches Patentamt

European Patent Office

Office européen des brevets

(11) Veröffentlichungsnummer: **0 312 626 B1**

(12) **EUROPÄISCHE PATENTSCHRIFT**

(45) Veröffentlichungstag der Patentschrift: **18.03.92**

(21) Anmeldenummer: **87115308.6**

(22) Anmeldetag: **20.10.87**

(51) Int. Cl.5: **B62D 53/06**, B62D 53/08, B62D 21/20

(54) **Sattelauflieger.**

(43) Veröffentlichungstag der Anmeldung:
**26.04.89 Patentblatt 89/17**

(45) Bekanntmachung des Hinweises auf die
Patenterteilung:
**18.03.92 Patentblatt 92/12**

(84) Benannte Vertragsstaaten:
**DE**

(56) Entgegenhaltungen:
US-A- 2 841 415
US-A- 2 915 320

(73) Patentinhaber: **Maschinenfabriken Bernard
Krone GmbH
Heinrich-Krone-Strasse 10
W-4441 Spelle(DE)**

(72) Erfinder: **Focks, Hubert, Dipl.-Ing.
Erlenweg 36
W-4450 Lingen(DE)**

(74) Vertreter: **Busse & Busse Patentanwälte
Postfach 1226 Grosshandelsring 6
W-4500 Osnabrück(DE)**

EP 0 312 626 B1

Rank Xerox (UK) Business Services

# Beschreibung

Die Erfindung bezieht sich auf einen Sattelauflieger in einer Ausbildung gemäß dem Oberbegriff des Anspruchs 1.

Ein bekannter Sattelauflieger (US-A-2 841 415) dieser Art weist einen selbsttragenden Aufbau, einen sogenannten Koffer- oder Containeraufbau, auf, der einen wesentlichen Teil der Beanspruchungen des Sattelaufliegers im Betrieb aufnimmt und dementsprechend einen entscheidenen Anteil an der Gesamtfestigkeit des Fahrzeugs hat. Das Chassis des Sattelaufliegers bildet die Bodenkonstruktion des selbsttragenden Aufbaus und ist für eine freitragende Verwendung ungeeignet.

Der bekannte Sattelauflieger hat einen vorderen Teil des Chassis mit herabgesetzter Höhe, der von einem Außenrahmen seitlich und frontseitig begrenzt ist, sofern nicht ein vorderer Querträger Verwendung findet, der über Eckstücke mit seitlichen Streben des Außenrahmens verbunden ist. Dabei umfaßt der vordere Teil des Chassis ein Teil mit einem oberseitigen Blech, das unterseitig durch quergerichtete, hutförmige Profilstreben versteift ist. Das seitlich mit dem Außenrahmen verschweißte Blech ist rückseitig abgekantet, greift in eine Aufnahmenut am vorderen Ende des rückwärtigen Teils des Chassis ein und ist mit einem vorderen Querträger des rückwärtigen Teils des Chassis über Schrauben verbunden. An seinem vorderen Rand ist das genannte Blech mit einem Oberblech einer Stützeinheit für den Königszapfen der Sattelkupplung verschweißt, das einem Unterblech im Abstand planparallel gegenüberliegt, welches über die Vorderkante des Oberblechs bis zum vorderen Querteil des Außenrahmens vorgezogen ist und rückseitig mit einem freien Rand die Nahtstelle zwischen den Blechen untergreift. Ein abschraubbar befestigtes Blech schließt sich vorderseitig an das Oberblech der Stützeinheit an.

Die rückwärtigen Enden der Seitenstreben des Außenrahmens sind über Übergangsstücke mit den vorderen Enden von außenliegenden Längsrahmenstreben des rückwärtigen Teils des Chassis verbunden und bilden den einzigen belastbaren Übergang zwischen dem vorderen und dem hinteren Teil des Chassis.

Dementsprechend ist bei dem vorbekannten Sattelauflieger eine Rahmenkonstruktion verwirklicht, die nur deshalb überhaupt die notwendige Fahrzeugfestigkeit trotz herabgesetzter Höhe des Außenrahmens im vorderen Teil des Chassis gewährleistet, weil die Wandungen des Aufbaus die benötigte Gesamtfestigkeit sichern. Die Ausbildung als Verbundkörper, der lediglich einen Bereich des vorderen Teils des Chassis einnimmt, ist für sich nur geeignet, Kräfte zu den Seitenstreben des Außenrahmens hin zu übertragen, bildet jedoch ansonsten keine freitragende Baueinheit, die geeignet wäre, frei vorkragend die weitaus höheren Längskräfte allein aufzunehmen.

Der Erfindung liegt die Aufgabe zugrunde, einen Sattelauflieger der eingangs genannten Art mit einem Chassis zu schaffen, das unter Beibehaltung der durch eine Stahlblechverbundbauweise erreichbaren Transportraumvergrößerung die für eine freitragende, von Aufbauten unabhängige Verwendung erforderliche Festigkeit und Verwindungssteifigkeit erbringt.

Diese Aufgabe löst die Erfindung durch einen Sattelauflieger mit den Merkmalen des Anspruchs 1. Weitere Ausgestaltungen ergeben sich aus den Ansprüchen 2 bis 5.

Der Sattelauflieger nach der Erfindung verwirlicht ein freitragendes Chassis, das aufgrund seiner Festigkeit und Steifigkeit unabhängig von irgendeinem Aufbau einsetzbar ist und alle aus zulässiger Beladung resultierenden Belastungen aufnehmen kann. Daher kann das Chassis für einen Plattform-Auflieger ebenso wie für einen Auflieger mit Plane und Spriegel als Aufbau Anwendung finden. Der flache Verbundkörper aus Stahlblech bildet dabei einen den gesamten vorderen Chassisteil einnehmenden, unmittelbar vor die profillängsträger des hinteren Teils des Chassis vorgesetzte Baueinheit, die aufgrund ihrer Gestaltung für sich in der Lage ist, alle Kräfte aufzunehmen und zu den Stirnenden der Profillängsträger hin zu übertragen. Die rückwärts abwärts gerichtete Schrägstellung des Unterblechs und der Abschluß der Baueinheit über einen quergerichteten rückwärtigen Verbindungssteg mit einer Höhe, die der Höhe der Profillängsträger entspricht, schafft dabei einen Übergang, der allen Belastungen gerecht wird. mit den Merkmalen des Anspruchs 1. Hinsichtlich wesentlicher weiterer Ausgestaltungen wird auf die Ansprüche 2 bis 14 verwiesen.

Das Chassis des erfindungsgemäßen Sattelaufliegers hat in dem maßgeblichen Bereich der Sattelkupplung eine nur noch einen Bruchteil bisher bekannter Rahmenwerke betragende Eigenhöhe mit der Folge, daß der Laderaum entsprechend höher ausgeführt werden kann und eine wesentliche Vergrößerung erfährt. Dennoch ist das Chassis bei preisgünstiger Herstellbarkeit außerordentlich stabil und ohne weiteres in der Lage, alle auftretenden Belastungen zu übernehmen.

Weitere Einzelheiten und Vorteile ergeben sich aus der nachfolgenden Beschreibung und der Zeichnung, in der ein bevorzugtes Ausführungsbeispiel des Gegenstands der Erfindung schematisch näher veranschaulicht ist. In der Zeichnung zeigen:

Fig. 1 eine schematische, abgebrochene Draufsicht auf den vorderen Teil des Chassis des erfindungsgemäßen Sattelaufliegers,

Fig. 2     einen schematischen Längsschnitt nach der Linie II-II in Fig. 1, und

Fig. 3     einen schematischen Querschnitt nach der Linie III-III in Fig. 1.

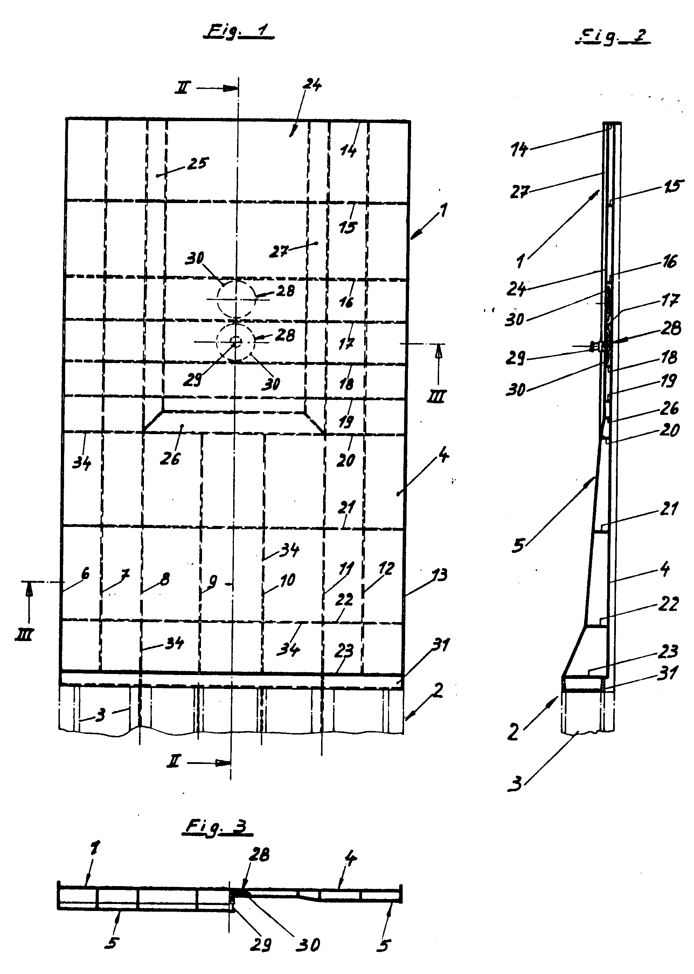

Das dargestellte Chassis umfaßt einen vorderen Teil 1, der als Verbundkörper aus Stahlblech ausgebildet ist, und einen rückwärtigen Teil 2, der eine herkömmliche Ausbildung als Rahmenwerk mit Profillängsträgern 3 und nicht näher veranschaulichten Profilquerträgern aufweist. Dieses rückwärtige Teil (2) des Chassis stützt dabei in seinem rückwärtigen Bereich in herkömmlicher Weise eine oder mehrere Radachsen an seiner Unterseite ab, die ebenfalls nicht näher veranschaulicht sind.

Der vor die Profillängsträger 3 vorgeschweißte Verbundkörper 1 ist als Hohlkörper ausgebildet und umfaßt ein ebenes Oberblech 4, ein im Grundriß mit diesem konturgleiches Unterblech 5 und zwischen diese zwischengeschweißte aufrechtstehende Verbindungsstege 6 bis 23, von denen die Verbindungsstege 6 bis 13 in Längsrichtung des Chassis und die Verbindungsstege 14 bis 23 in Querrichtung des Chassis verlaufen. Die Verbindungsstege 6,13 bzw. 14,23 bilden dabei die Außenverbindungsstege, die mit den Außenrändern des Ober- und des Unterbleches 4,5 verschweißt sind.

Im vorderen Bereich des Hohlkörpers, nämlich im Bereich zwischen den quergerichteten Verbindungsstegen 14 bis 20, ist das Unterblech 5 planparallel zum Oberblech 4 ausgerichtet. In seinem rückwärtigen Bereich, nämlich im Bereich zwischen den quergerichteten Verbindungsstegen 20 bis 23, hat das Unterblech 5 eine rückwärts abwärts ausgerichtete Schrägstellung. Diese Schrägstellung nimmt dabei in Stufen zu, wobei sich die erste Stufe vom quergerichteten Verbindungssteg 20 bis zum quergerichteten Verbindungsstege 22 und die zweite Stufe von letzterem zum quergerichteten Verbindungssteg 23 erstreckt. An seinem rückwärtigen Querrand hat dabei das Unterblech 5 einen Abstand zum Oberblech 4, der zumindest im wesentlichen der Höhe der im rückwärtigen Teil 2 des Chassis verwendeten Profillängsträger 3 entspricht.

In seinem an die vordere Querkante des Hohlkörpers 1 angrenzenden, sich über die Länge des vorderen Bereichs des Hohlkörpers 1 erstreckenden Mittelbereich, der beim dargestellten Beispiel durch die Verbindungsstege 8,11 und 14,19 umgrenzt wird, hat das Unterblech 5 eine planparallele Einziehung 24 mit einem randseitigen Übergangsbereich 25,26,27. Durch diese Einziehung, die den Oberteil 28 der Sattelkupplung umgibt, wird die Höhe des Hohlkörpers 1 in diesem Mittelbereich nochmals herabgesetzt, und zwar bevorzugt auf etwa 50 mm, wobei die Höhe im nichteingezogenen vorderen Bereich des Hohlkörpers 1 bevorzugt etwa 80 mm beträgt. In seinem rückwärtigen Bereich kann dann der Hohlkörper 1 beispielsweise im Bereich des rückwärtigen Außenverbindungssteges 23 eine Höhe von beispielsweise 360 mm annehmen.

Besonders günstig ist es dabei, wenn ein - oder wie beim dargestellten Ausführunsbeispiel zwei hintereinandergeordnete - unterseitig mit dem Verbindungszapfen (Königszapfen) 29 verbindbarer Trägerkörper 30 des Oberteils 28 der Sattelkupplung zwischen Ober- und Unterblech 4,5 angeordnet und an diesen festgelegt, insbesondere mit diesen verschweißt ist bzw. sind.

Zwischen dem Hohlkörper 1 und den Profillängsträgern 3 des rückwärtigen Teils 2 des Chassis ist ein gesonderter Profilquerträger 31 als Übergangsträger vorgesehen, der sich über die Chassisbreite erstreckt und einerseits mit dem rückwärtigen Ende des Hohlkörpers 1 und andererseits mit den Stirnenden der Profillängsträger 3 verschweißt ist. Bevorzugt ist dabei der Übergangsträger 31 mit einem U-Profil ausgeführt und an seinen freien Schenkelenden mit dem rückwärtigen Außenverbindungssteg 23 und an seinem Mittelschenkel mit den Profillängsträgern 3 verschweißt. Diese Ausgestaltung sorgt für eine gleichmäßige Verteilung der am Übergang von den Profillängsträgern auf den Hohlkörper 1 auftretenden Spannungen und vergleichmäßigt und verringert die auftretenden Belastungen.

Die Innenverbindungsstege 7 bis 12 bzw. 15 bis 22 werden entweder mit dem Oberblech 4 oder mit dem Unterblech 5 zu einer Baugruppe vorverschweißt, und zwar durch Nahtschweißung entlang ihrer Basiskanten. Die Innenverbindungsstege 7 bis 12 bzw. 15 bis 22 werden alsdann mit dem mit der Baugruppe vereinigten Unter- bzw. Oberblech 5,4 ebenfalls entlang ihrer diesem Blech benachbarten Stegränder verschweißt. Um eine arbeitsgünstige Außenschweißung zu ermöglichen, ist dabei das später hinzugefügte Ober- bzw. Unterblech 4 bzw. 5 mit schmalen Schlitzen 34 im Bereich der Stegränder versehen, entlang denen die Verschweißung auf einfache Weise von oben her vorgenommen werden kann.

Bevorzugt finden für das Oberblech 4 und das Unterblech 5 Stahlbleche in einer Dicke von 5 bis 8 mm, vorzugsweise 6 mm Verwendung. Diese Blechstärken sind auch für die Verbindungsstege 6 bis 23 bevorzugt.

**Patentansprüche**

1.   Sattelauflieger mit einem Chassis (1,2), das aus einem rückwärtigen Teil (2) aus Profillängsträgern (3), an deren Unterseite eine oder mehrere Radachsen abgestützt sind, und einem vorderen Teil (1), der den Oberteil (28) einer Sattelkupplung abstützt, besteht, wobei der vordere Teil (1) einen flachen Verbundkörper (1) aus Stahlblech aufweist, der ein ebenes Oberblech (4) und ein im Abstand zu diesem verlaufendes Unterblech (5) und zwischen diese zwischengeschweißte, aufrechtstehende Verbindungsstege (6-23) umfaßt, **dadurch gekennzeichnet,** daß der Verbundkörper (1) eine unmittelbar vor die Profillängsträger (3) vorgesetzte Baueinheit bildet, innerhalb der das Ober- und das Unterblech (4,5) im Grundriß konturgleich ausgebildet sind und den gesamten vorderen Teil des Chassis einnehmen, daß das Unterblech (5) im rückwärtigen Bereich des Verbundkörpers (1) aus einer zum Oberblech (4) planparallelen Lage in eine rückwärts abwärtsgerichtete Schrägstellung übergeht, und daß das Ober- und Unterblech (4,5) entlang ihrer Außenränder durch Außenverbindungsstege (6,13;14,23) zu einem geschlossenen Hohlkörper verbunden sind wobei der quergerichtete rückwärtige Verbindungssteg (23) eine der Höhe der Profillängsträger (3) entsprechende Höhe aufweist und mit den Stirnenden der Profillängsträger (3) verschweißt ist.

**2.** Sattelauflieger nach Anspruch 1, **dadurch gekennzeichnet,** daß das Unterblech (5) im rückwärtigen Bereich des Verbundkörpers (1) eine nach hinten hin in Stufen zunehmende Schrägstellung aufweist.

**3.** Sattelauflieger nach Anspruch 1 oder 2, **dadurch gekennzeichnet,** daß das Unterblech (5) in einem an die vordere Querkante des Verbundkörpers (1) angrenzenden, sich über die Länge des vorderen Bereichs des Verbundkörpers (1) erstreckenden und den Oberteil (28) der Sattelkupplung umgebenden Mittelbereich eine planparallele Einziehung (24) mit randseitigen Übergangsbereichen (25,26,27) aufweist.

**4.** Sattelauflieger nach Anspruch 3, **dadurch gekennzeichnet,** daß der Verbundkörper (1) in seinem vorderen Bereich eine Gesamthöhe von etwa 80 mm und im Bereich der Einziehung (24) von etwa 50 mm hat.

**5.** Sattelauflieger nach einem der Ansprüche 1 bis 4, **dadurch gekennzeichnet,** daß die Bleche (4,5,6-23) des Verbundkörpers (1) eine Dicke von 5 bis 8 mm, vorzugsweise 6 mm, haben.

**Claims**

**1.** A semi-trailer with a chassis (1,2) which consists of longitudinal profile members (3) forming the rear part (2), on the underside of which are supported one or a plurality of wheel axles, and of a front part (1) which supports the upper part (2) of a semi-trailer coupling, the front part (1) having a flat composite member (1) of steel plate which comprises a flat upper plate (4) and, extending at a distance therefrom, a bottom plate (5) and welded between these upright connecting webs (6,23), characterised in that the composite member (1) forms a structural unit provided directly in front of the longitudinal profile member (3), the top and bottom plates (4,5) of the unit being in plan view of identical contours and occupy the entire front part of the chassis, and in that the bottom plate (5), in the rear portion of the composite member (1) changes from an orientation in the front portion in which it is in a plane parallel with the top plate (4) into a rearwardly and downwardly directed oblique orientation, and in that the top and bottom plates (4,5) are along their outer edges connected by outer connecting webs (6,13;14,23) to form a closed hollow body, the transversely directed rearward connecting web (23) having a height corresponding to the height of the longitudinal profile members (3) and being welded to the ends of the longitudinal profile members (3).

**2.** A semi-trailer according to Claim 1, characterised in that in the rear portion of the composite member (1), the inlination of the bottom plate (5) increases rearwardly in steps.

**3.** A semi-trailer according to Claim 1 or 2, characterised in that the bottom plate (5) comprises a plane-parallel retracted portion (24) having marginal transition zones (25,26,27), the retracted portion surrounding the upper part (28) of the semi-trailer coupling and extending from the front transverse edge of the composite member (1) over the length of the front portion of the composite member (1).

**4.** A semi-trailer according to Claim 3, characterised in that the composite member (1) has in its front portion a total height of about 80 mm and a height of about 50 mm in the region of the retracted portion (24).

**5.** A semi-trailer according to one of Claims 1 to 4, characterised in that the metal plates (4,5,6-23) of the composite member (1) have a thickness of 5 to 8 mm an preferably 6 mm.

## Revendications

1. Semi-remorque comportant un châssis (1, 2) constitué d'une partie postérieure (2) faite de longerons profilés (3) sur la face inférieure desquels sont montés un ou plusieurs essieux, et d'une partie antérieure (1), qui supporte la partie supérieure (28) d'un attelage pivotant, la partie antérieure (1) comprenant un corps composé plat (1), en tôle d'acier, qui comprend une tôle supérieure plane (4) et une tôle inférieure (5) s'étendant à distance de la première, et, entre les deux, des entretoises de liaison (6-23) disposées sur champ et soudées, caractérisée en ce que le corps composé (1) forme une unité modulaire prévue immédiatement devant les longerons profilés (3), dans laquelle la tôle supérieure et la tôle inférieure (4, 5) ont, en plan, le même contour et occupent la partie antérieure complète du châssis, que la tôle inférieure (5), dans la zone postérieure du corps composé (1), passe d'une position plane et parallèle à la tôle supérieure (4) à une position oblique dirigée vers le bas et vers l'arrière, et que la tôle supérieure et la tôle inférieure (4, 5) sont reliées en un corps creux fermé, le long de leurs bords extérieurs, par des entretoises de liaison extérieures (6, 13; 14, 23), l'entretoise de liaison postérieure transversale (23) présentant une hauteur correspondant à la hauteur des longerons profilés (3) et étant soudée aux extrémités d'about des longerons profilés (3).

2. Semi-remorque suivant la revendication 1, caractérisée en ce que la tôle inférieure (5), dans la zone postérieure du corps composé (1), occupe une position oblique qui s'accentue vers l'arrière par paliers.

3. Semi-remorque suivant la revendication 1 ou 2, caractérisée en ce que la tôle inférieure (5) présente un renfoncement plan parallèle (24) avec des zones de transition marginales (25, 26, 27), dans une région médiane adjacente au bord transversal antérieur du corps composé (1), s'étendant sur la longueur de la zone antérieure du corps composé (1) et entourant la partie supérieure (28) de l'attelage pivotant.

4. Semi-remorque suivant la revendication 3, caractérisée en ce que le corps composé (1) présente, dans sa zone antérieure, une hauteur hors tout d'environ 80 mm et dans la zone du renfoncement (24), une hauteur hors tout d'environ 50 mm.

5. Semi-remorque suivant l'une quelconque des revendications 1 à 4, caractérisée en ce que les tôles (4, 5, 6-23) du corps composé (1) ont une épaisseur de 5 à 8 mm, de préférence de 6 mm.

Fig. 1

Fig. 2

Fig. 3